# EUROPEAN PATENT APPLICATION

(11) **EP 0 851 654 A2**
(43) Date of publication of application: **01.07.1998**
(21) Application number: 97310532.3
(22) Date of filing: 23.12.1997
(51) Int. Cl.: H04M 11/06

(54) **Communication interface module and information processing apparatus**

(30) Priority: 25.12.1996 JP 346031/96
(71) Applicant: FUJITSU LIMITED, Kawasaki-shi, Kanagawa 211-8588 (JP)
(72) Inventor: Sato, Yasuo, Nakahara-ku, Kawasaki-shi, Kanagawa 211 (JP); Yano, Katsutoshi, Nakahara-ku, Kawasaki-shi, Kanagawa 211 (JP); Takebayashi, Tomoyoshi, Nakahara-ku, Kawasaki-shi, Kanagawa 211 (JP)
(74) Representative: Gibbs, Christopher Stephen

(57) **Abstract**

A communication interface module (100) comprising: a first interface part (110) which couples a data processing device (200) to the rest of the communication interface module (100); a modem part (140) which allows the data processing device (200) to communicate with a remote device via a transmission line (300); a second interface part (130) which couples a telephone set (400) coupled to the communication interface module (100) to the transmission line (300); a sound part (170) which generates a sound signal; and an add part (180) which selectively adds the sound signal to a signal transferred between the telephone set (400) and the transmission line (300).

## Description

### BACKGROUND OF THE INVENTION

### 1. Field of the Invention

The present invention generally relates to communication interface modules, and more particularly to a communication interface module which can be suitably provided in an information processing apparatus such as a personal computer and which integrally has a sound function and a modem function.

Recently, information processing apparatus such as personal computers have been used to communicate with remote terminals or the like via telephone lines. Generally, a modem is required to connect the personal computer to a network. The modem has the function of converting data processed by the personal computer into a signal which can be transferred over the telephone lines.

Also, the personal computers have been designed to deal with multimedia, and have required an advanced modem of a higher bit rate. An increase in the bit rate of the modem makes it possible to realize further advanced communication services corresponding to the multimedia. One of the advanced communication services is a real-time voice service. In practice, a highly advanced communication interface module will be required to realize the real-time voice service.

### 2. Description of the Related Art

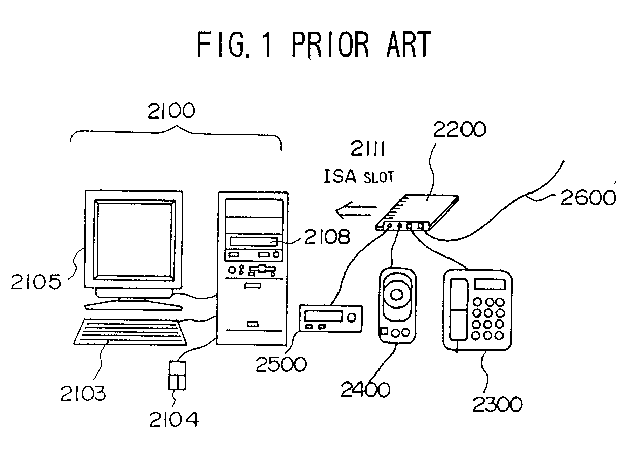

Fig. 1 is a diagram of a conventional communication system. The system includes a personal computer 2100, a communication interface module 2200, a telephone set 2300, a speaker 2400, a CD (Compact Disk) player 2500, and a telephone line 2600. Data processed by the personal computer 2100 is supplied to the communication interface module 2200, which converts the data into an analog signal. The analog signal thus obtained is sent to a remote computer via a network having the telephone line 2600.

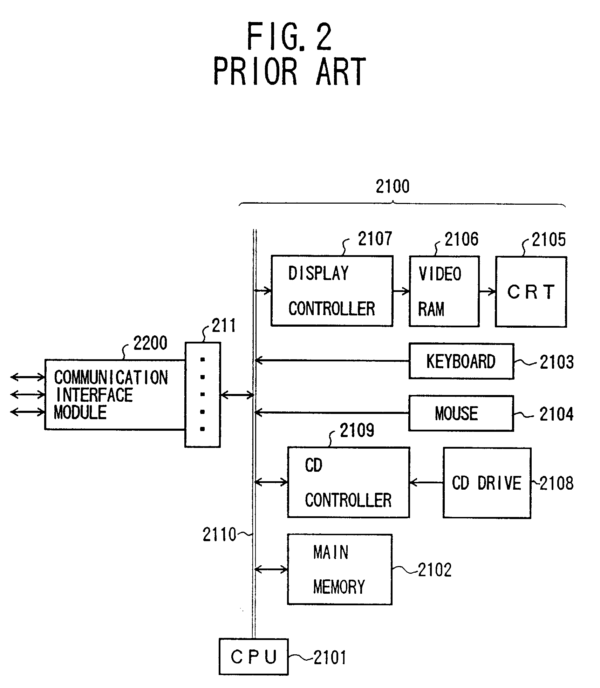

Fig. 2 is a block diagram of the personal computer 2100. The personal computer 2100 includes a CPU 2101, a main memory 2102, a keyboard 2103, a mouse 2104, a CRT 2105, a video RAM 2106, a display controller 2107, a CD drive 2108, a CD controller 2109, a bus 2110, and a slot 2111. The CPU 2101 controls the overall personal computer 2100. The main memory 2102 is used to store data. The keyboard 2103 is used to input data and instructions. The video RAM 2106 is used to store data to be displayed on the CRT 2105. The display controller 2107 processes data processed by the CPU 2101 in order to create display planes displayed on the CRT 2105. The CD drive 2108 is used to read data from a CD. The bus 2110 connects the CPU 2101, the main memory 2102, the keyboard 2103, the mouse 2104, the display controller 2107, the CD controller 2109 and the slot 2111. The communication interface module 2200 can be inserted into the slot 2111.

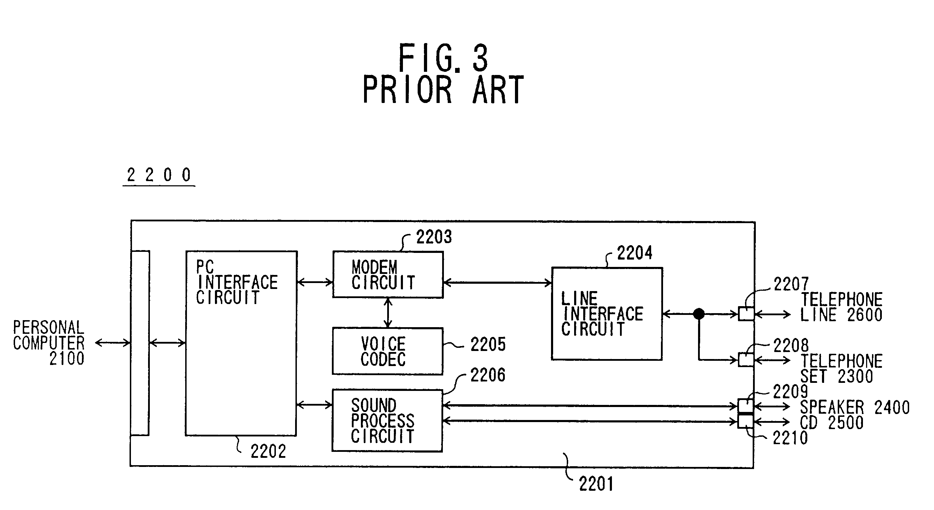

Fig. 3 is a block diagram of the communication interface module 2200, which has the communication function of communicating with the remote terminals via the telephone line 2600 and the sound function of processing a sound signal. The term "sound" used in the disclosure includes any acoustic signal, and can be a voice signal or an audio or sound signal. The module 2200 has a printed-circuit board 2201, on which provided are a PC interface circuit 2202, a modem circuit 2203, a line interface circuit 2204, a voice codec circuit 2205, and a sound process circuit 2206. The PC interface circuit 2202 makes an interface with the personal computer 2100. The modem circuit 2203 is connected to the PC interface circuit 2202, and converts digital data from the personal computer 2100 into an analog signal to be transferred over the telephone line 2600. The voice codec circuit 2205 converts digital voice data processed by the personal computer 2100 into an analog voice signal, and converts an analog voice signal into a digital voice signal. The sound process circuit 2206 converts an analog sound signal externally supplied into digital sound data to be supplied to the personal computer 2100. Further, the sound process circuit 2206 converts digital voice data processed by the personal computer 2100 into an analog voice signal.

The module 2200 is equipped with a line connector 2207, a telephone set connector 2208, a speaker connector 2209 and an external sound input connector 2210. The telephone line 2600 is connected to the connector 2207. The telephone set 2300 is connected to the connector 2208. The speaker 2400 is connected to the connector 2209. The CD player 2500 is connected to the connector 2210.

However, the conventional communication interface module with the sound function has the following disadvantages.

First, the sound function and the communication function are separately provided, so that only restricted services can be realized.

Second, if the personal computer 2100 requests a connection to the telephone line 2600 in a case where the telephone line 2600 is now in use for the telephone set 2300, the personal computer 2100 cannot be connected to the telephone line 2600. The communication interface module 2200 does not monitor the states of the telephone set 2300 and the telephone line 2600, and thus the personal computer 2100 cannot recognize the states thereof.

### SUMMARY OF THE INVENTION

It is a general object of the present invention to provide a communication interface module in which the above disadvantages are eliminated.

A more specific object of the present invention is to provide a communication interface module capable of providing advanced services based on the communication function and the sound function.

Another object of the present invention is to provide a communication interface module having a structure which enables a personal computer connected to the module to recognize the states of a telephone set and a communication line connected to the module .

The above objects of the present invention are achieved by a communication interface module comprising: a first interface part which couples a data processing device to the communication interface module; a modem part which allows the data processing device to communicate with a remote device via a transmission line; a second interface part which couples a telephone set coupled to the communication interface module to the transmission line; a sound part which generates a sound signal; and an add part which selectively adds the sound signal to a signal transferred between the telephone set and the transmission line.

The communication interface module may be configured so that the add part adds the sound signal to the signal transferred between the telephone set and the transmission line in response to a given command supplied from the data processing device.

The communication interface module may be configured so as to further comprise an on-hook/off-hook detection circuit which determines whether the telephone set is in an on-hooked state or an off-hooked state and informs the data processing device of a detected state of the telephone set.

The communication interface module may be configured so that it further comprises a detection circuit which detects a telephone number which is input via the telephone set and informs the data processing device of the telephone number detected via the first interface part.

The communication interface module may be configured so that it further comprises an information storage unit which stores the telephone number detected by the detection circuit.

The communication interface module may be configured so that the information storage unit comprises: a buffer part which stores the telephone number detected by the detection circuit; a management part which manages the telephone number stored in the buffer part; and a controller which causes the telephone number detected by the detection circuit after it is determined that the telephone set is in the off-hooked state to be stored in the buffer part and causes the telephone number stored in the buffer part to be registered in the management part.

The communication interface module may be configured so that the management part manages given information concerning the telephone number together with the telephone number registered in the management part.

The communication interface module may be configured so that the management part manages information which shows a number of telephone numbers registered therein.

The communication interface module may be configured so that the management part manages a date of registration for each telephone number registered therein.

The communication interface module may be configured so that the first interface part conforms with the RS232C interface.

The communication interface module may be configured so as to further comprise a printed-circuit board on which the first interface part, the modem part, the second interface part, the sound part which generates a sound signal, and the add part are mounted.

A further object of the present invention is to provide an information processing apparatus comprising: a data processing device; a first interface part which couples the data processing device to the communication interface module; a modem part which allows the data processing device to communicate with a remote device via a transmission line; a second interface part which couples a telephone set coupled to the communication interface module to the transmission line; a sound part which generates a sound signal; and an add part which adds the sound signal to a signal transferred between the telephone set and the transmission line.

A still further object of the present invention is to provide an information processing apparatus comprising information processing apparatus comprising: a data processing device; a first interface part which couples the data processing device to the communication interface module; a modem part which allows the data processing device to communicate with a remote device via a transmission line; a second interface part which couples a telephone set coupled to the communication interface module to the transmission line; a detection circuit which detects a telephone number which is input via the telephone set and informs the data processing device of the telephone number detected via the first interface part.

### BRIEF DESCRIPTION OF THE DRAWINGS

Other objects, features and advantages of the present invention will become more apparent from the following detailed description when read in conjunction with the accompanying drawings, in which:
Fig. 1 is a diagram of a conventional personal computer system;
Fig. 2 is a block diagram of a structure of a personal computer shown in Fig. 1;
Fig. 3 is a block diagram of a structure of a communication interface module shown in Fig. 1;
Fig. 4 is a block diagram of a communication interface module according to a first embodiment of the present invention;
Fig. 5 is a diagram of a data processing system using the communication interface module according to the first embodiment of the present invention;
Fig. 6 is a block diagram of a personal computer used in the data processing system shown in Fig. 5;
Fig. 7 is a diagram of a variation of the first embodiment of the present invention;
Fig. 8 is a block diagram of a communication interface module according to a second embodiment of the present invention;
Fig. 9 is a diagram of a data processing system using the communication interface module according to the second embodiment of the present invention;
Fig. 10 is a block diagram of a computer system used in the data processing system shown in Fig. 9;
Fig. 11 is a block diagram of a communication interface module according to a third embodiment of the present invention;
Fig. 12 is a block diagram of a communication interface module according to a fourth embodiment of the present invention;
Fig. 13 is a block diagram of an information storage unit used in the fourth embodiment of the present invention;
Fig. 14 is a sequence diagram of an operation of the information storage unit used in the fourth embodiment of the present invention;
Fig. 15 is a block diagram of a first variation of the information storage unit of the fourth embodiment of the present invention;
Fig. 16 is a sequence diagram of an operation of the first variation shown in Fig. 15;
Fig. 17 is a block diagram of a second variation of the information storage unit of the fourth embodiment of the present invention;
Fig. 18 is a diagram of a data structure of a telephone directory management table used in the second variation of the information storage unit of the fourth embodiment of the present invention;
Fig. 19 is a sequence diagram of an operation of the second variation of the information storage unit of the fourth embodiment of the present invention; and
Fig. 20 is a diagram of a display plane created by an application program executed by a personal computer used in the second variation of the fourth embodiment of the present invention.

### DESCRIPTION OF THE PREFERRED EMBODIMENTS

A description will now be given of an embodiment of the present invention by referring to the drawings.

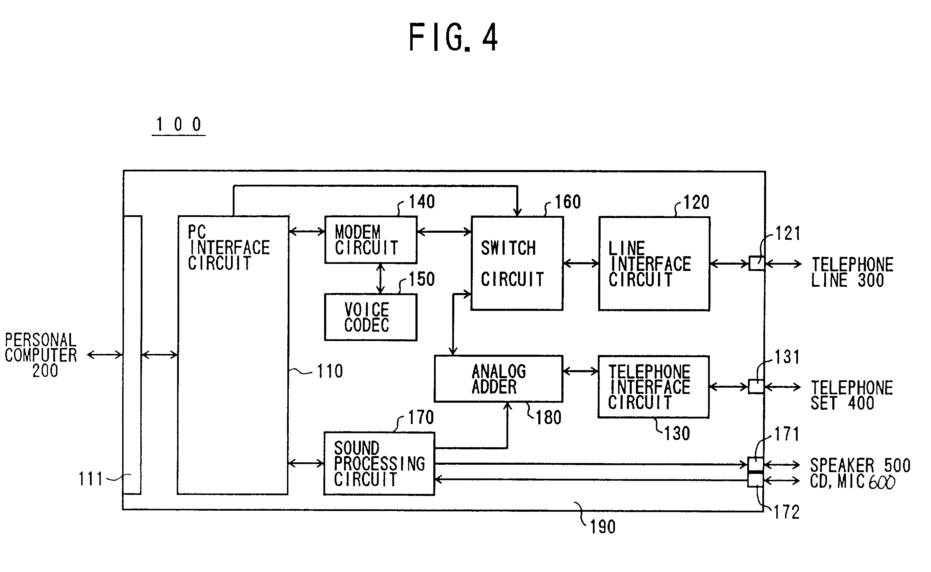

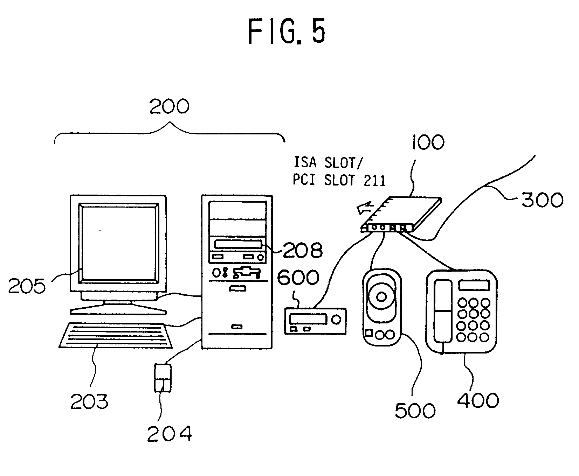

Fig. 4 is a block diagram of a communication interface module 100 according to a first embodiment of the present invention, and Fig. 5 is a diagram of a data processing system to which the communication interface module shown in Fig. 4 is applied.

The communication interface module 100 includes a PC interface circuit 110, a line interface circuit 120, a telephone interface circuit 130, a modem circuit 140, a voice codec circuit 150, a switch circuit 160, a sound processing circuit 170 and an analog adder 180.

The PC interface circuit 110 interfaces with a personal computer 200. The line interface circuit 120 interfaces with a telephone line 300. The telephone interface circuit 130 interfaces with a telephone set 400. The modem circuit 140 converts digital data from the personal computer 200 into an analog signal and supplies the analog signal to the telephone line 300. The voice codec circuit 150, which is connected to the modem circuit 140, converts an analog voice signal received via the telephone line 300 into digital voice data to be supplied to the personal computer 200 and converts digital voice data from the personal computer 200 into an analog voice signal to be supplied to the telephone line 300. The switch circuit 160 connects the telephone line 300 to either the personal computer 200 or the telephone set 400. The sound processing circuit 170 converts digital data from the personal computer 200 into a voice signal to be supplied to a speaker 500, and converts an analog voice signal externally supplied into digital data to be supplied to the personal computer 200. The analog adder 180 adds (superimposes) the analog signal processed by the sound processing circuit 170 to the signal transferred between the telephone set 400 and the telephone line 300.

The communication interface module 100 has a printed-circuit board 190, on which the blocks 110-180 are mounted. The printed-circuit board 190 includes a PC connection terminal 111 used to connect the communication interface module 100 to the personal computer 200. The PC connection terminal 111 is connected to the PC interface circuit 110 formed on the printed-circuit board 190. The PC connection terminal 111 of the module 100 can be inserted into a slot 211 of the personal computer 200 mounted on a motherboard of the personal computer. The slot 211 conforms with, for example, the ISA (Industry Standard Architecture) or PCI (Personal Component Interconnect [ Interface] ).

On the printed-circuit board 190, provided are a connector 121 for making a connection with the telephone line 300, a connector 131 for making a connection with the telephone set 400, a connector 171 for making a connection with the speaker 500, and a connector 172 for making a connection with a CD drive for use in music reproduction, a microphone or the like. The connector 121 is connected, on the printed-circuit board 190, to the line interface circuit 120. A connector provided to the end of the telephone line 300 is connected to the connector 121, so that the communication interface module 110 can be connected to the telephone line 300.

The connector 131 is connected, on the printed-circuit board 190, to the telephone interface circuit 130. The connector 131 can be connected to a connector provided to the end of a cable extending from the telephone set 400, so that the communication interface module 100 can be connected to the telephone set 400. The connector 171 is connected, on the printed-circuit board 190, to the sound processing circuit 170. A stereo-type jack or the like connected to the speaker 500 can be inserted into the connector 171, so that the communication interface module 100 can be connected to the speaker 500. The connector 172 is connected, on the printed-circuit board 190, to the sound processing circuit 170. A stereo-type jack connected to a sound output terminal of the music reproduction CD drive 600 can be inserted into the connector 172, so that the communication interface module 100 can be connected to the CD drive 600.

The PC interface circuit 110 realizes an interface between the personal computer 200 and the communication interface module 100, and is connected to the modem circuit 140 and the sound processing circuit 170. The modem circuit 140 converts digital data from the personal computer 200 into the analog signal which can be transferred over the telephone line 300, and converts the analog signal from the telephone line 300 into digital data handled by the personal computer 200. The modem circuit 140 is connected to the voice codec circuit 150, which converts digital voice data into an analog voice signal to be supplied to the telephone line 300, and converts an analog voice signal from the telephone line 300 into digital voice data handled by the personal computer 200.

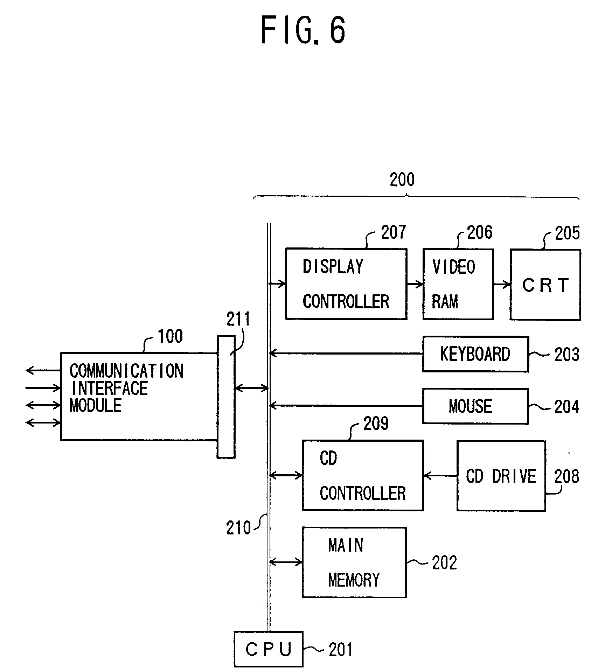

Fig. 6 is a block diagram of a structure of the personal computer 200. The personal computer 200 includes a CPU 201, a main memory 202, a keyboard 203, a mouse 204, a CRT 205, a video RAM 206, a display controller 207, a CD drive 208, a CD controller 209, a bus 210, and a slot 211. The CPU 201 controls the overall personal computer 200. The main memory 202 is used to store data. The keyboard 203 is used to input data and instructions. The video RAM 206 is used to store data to be displayed on the CRT 205. The display controller 207 processes data processed by the CPU 201 in order to create display planes displayed on the CRT 205. The CD drive 208 is used to read data from a CD. The bus 210 connects the CPU 201, the main memory 202, the keyboard 203, the mouse 204, the display controller 207, the CD controller 209 and the slot 211. The communication interface module 200 can be inserted into the slot 211.

Turning now to Fig. 4, the modem circuit 140 is connected to the line interface circuit 120 via the switch circuit 160. The switch circuit 160 is connected to the PC interface circuit 110, and preforms the switching operation in response to a switching control signal supplied from the PC interface circuit 110.

The PC interface circuit 110 generates the switching control signal on the basis of an instruction from the personal computer 200, and supplies it to the switch circuit 160. The personal computer 200 can generate a command which instructs the PC interface circuit 110 to make a connection between the personal computer 200 and the telephone line 300. The PC interface circuit 110 receives the above command and generates the switching control signal which causes the switch circuit 160 to connect the modem circuit 140 and the line interface circuit 120 together. As long as the switch circuit 160 does not receive the command, the switching circuit 160 continues to make a connection between the analog adder 180 and the line interface circuit 120. For example, when the power supply of the personal computer 200 is OFF, or the modem circuit 140 is not being used, the telephone line 300 is connected to the telephone set 400 via the switch circuit 160. Hence, even if the personal computer 200 does not work, the user can use the telephone set 400.

The sound processing circuit 170 converts digital voice data supplied from the personal computer 200 into an analog voice signal supplied to the speaker 500, so that a voice (sound output) processed by the personal computer 200 can be output via the speaker 500. Further, the analog voice signal is supplied to the analog adder 180 in response to a command from the personal computer 200. The sound processing circuit 170 converts an analog sound signal supplied from the music reproduction CD drive 600 connected to the connector 172 into digital sound data, and supplies it to the personal computer 200. Further, the above analog sound signal is supplied to the analog adder 180 in response to a command from the personal computer 200.

The analog adder 180 is connected between the telephone interface circuit 130 and the switch circuit 160, and adds the analog sound signal supplied from the sound processing circuit 170 to the analog voice signal transferred between the switch circuit 160 and the telephone interface circuit 130. For example, when the personal computer 200 supplies the sound processing circuit 170 with a command which instructs it to add (superimpose) the analog sound signal to the voice signal transferred between the telephone line 300 and the telephone set 400, the sound processing circuit 170 supplies the analog sound signal being processed to the analog adder 180.

In the above case, if the sound processing circuit 170 is processing the analog sound signal from the music reproduction CD drive 600 connected to the connector 172, the sound processing circuit 170 supplies the analog sound signal from the CD drive 600 to the analog adder 180 in response to the above command. Hence, the analog sound signal reproduced by the CD drive 600 is supplied to the telephone line 300 and the telephone set 400, so that a background music can be added to a conversation between the telephone set 400 and the remote terminal coupled to the telephone line 300.

In the first embodiment of the present invention, the CD drive 600 is externally connected to the personal computer 200. As a variation of the first embodiment of the present invention, it is possible to use the CD ROM drive 208 built in the personal computer 200.

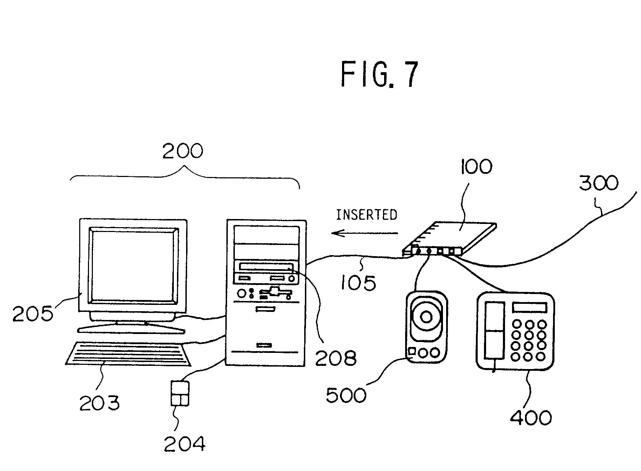

Fig. 7 is a diagram of the above variation of the first embodiment of the present invention. Music reproduced by the CD drive 208 is supplied to the communication interface module 100 via an output line 105, which extends from the CD drive 208 and is connected to the terminal 172 of the communication interface module 100.

The communication interface module 100 used in the first embodiment of the present invention is a modem card, which can be externally inserted into the personal computer 200. Alternatively, the communication interface module 100 can be an external modem device, which can be externally connected to the personal computer 200 in the RS232C formation

A description will now be given of a communication interface module according to a second embodiment of the present invention.

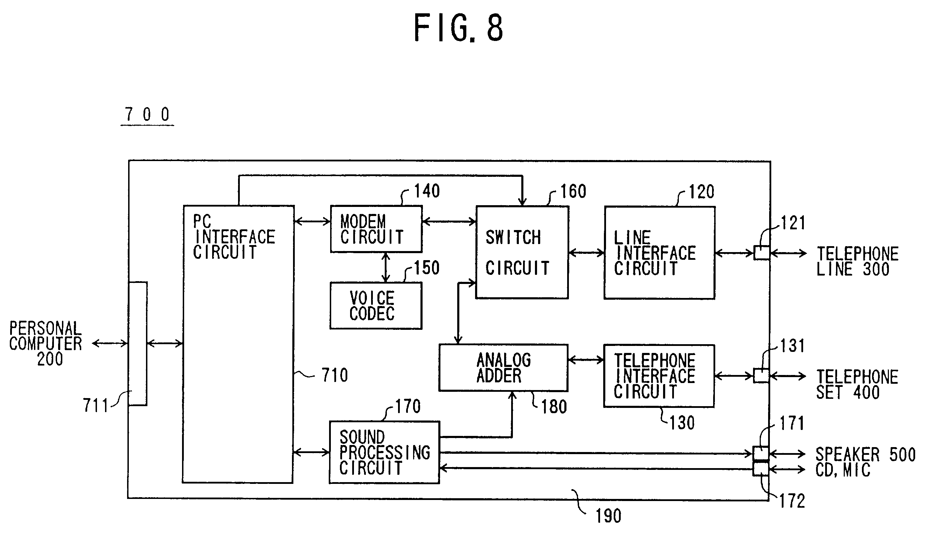

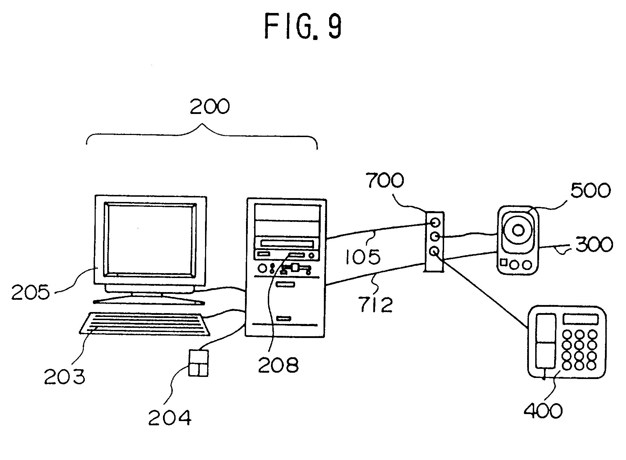

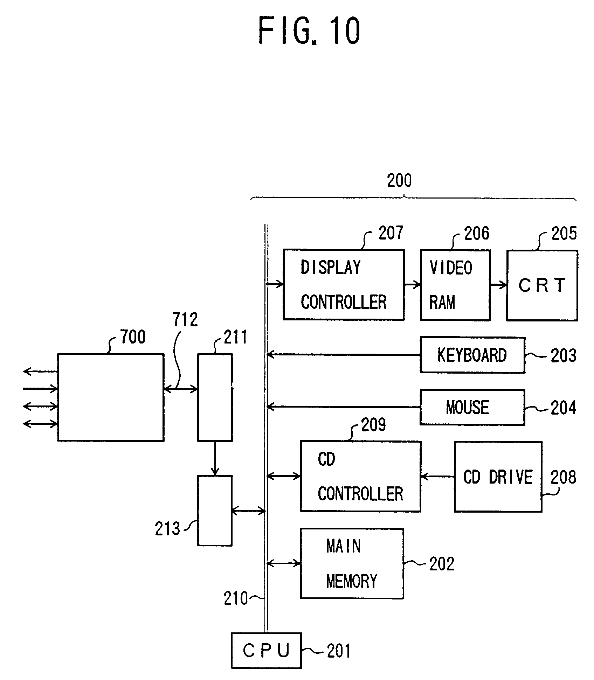

Fig. 8 is a block diagram of a communication interface module 700 according to a second embodiment of the present invention. Fig. 9 is a diagram of a data processing system equipped with the communication interface module 700 shown in Fig. 8. Fig. 10 is a block diagram of a computer system used in the data processing system shown in Fig. 9. In Figs. 8, 9 and 10, parts that are the same as those shown in the previously described figures are given the same reference numbers.

The communication interface module 700 has a PC interface circuit 710, which conforms with the RS232C interface formation and is connected to a connector 711 having 25 pins. The communication interface module 700 is connected to the personal computer 200 via a RS232C cable 712 and a connector 211, to which a communication interface circuit 213 is connected. According to the second embodiment of the present invention, the personal computer 200 can communicate with the communication interface module 700 through the RS232C interface.

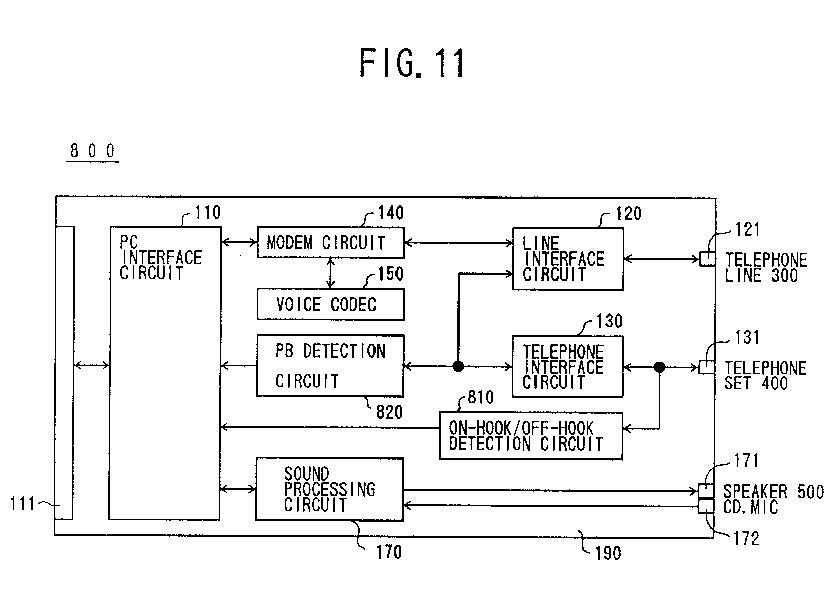

Fig. 11 is a block diagram of a communication interface module 800 according to a third embodiment of the present invention. In Fig. 11, parts that are the same as those shown in the previously described figures are given the same reference numbers.

The communication interface module 800 makes it possible for the personal computer 200 to monitor the state of the telephone set 400. The module 800 is equipped with an on-hook/off-hook detection circuit 810 and a PB (Push Button) detection circuit 820. The on-hook/off-hook detection circuit 810 detects the state of the hook of the telephone set 400. The PB detection circuit 820 detects a PB signal generated when the telephone number of a remote terminal is input through the telephone set 400 (by using a ten-key pad thereof).

The on-hook/off-hook detection circuit 810 is connected between the node connecting the telephone interface circuit 130 and the connector 131 and the PC interface circuit 110. The circuit 810 detects a current supplied when the telephone set 400 is in the off-hooked state, and determines whether the telephone set 400 is in the off-hooked state or the on-hooked state. When the circuit 810 detects the off-hook state of the telephone set 400, the circuit 810 supplies a high-level off-hook signal to the PC interface circuit 110. When the circuit 810 detects the on-hook state in which no current is supplied to the above node, the circuit 810 supplies a low-level on-hook signal to the PC interface circuit 110.

The PB detection circuit 820 is connected between a node connecting the line interface circuit 120 and the telephone interface circuit 130 and the PC interface circuit 110. The circuit 820 detects the PB signal and discriminates the telephone number. The PB detection circuit 820 detects the frequency (tone) of the PB signal obtained in the node in which the circuits 120 and 130 are connected together, and translates the detected frequency into corresponding digital data, which is then supplied to the PC interface circuit 110. Thus, the digital data generated by the PB detection circuit 820 indicates the telephone number.

The PC interface circuit 110 supplies the personal computer 200 with the output signals of the circuits 810 and 820. The personal computer 200 detects the telephone number from the digital data generated by the PB detection circuit 820, and displays the detected telephone number and the detected state of the hook of the telephone set 400 on the CRT 205.

According to the third embodiment of the present invention, the personal computer 200 manages the state of the hook of the telephone set 400 and the telephone number input through the telephone set 400, and causes the above detected information to be displayed on the CRT 205.

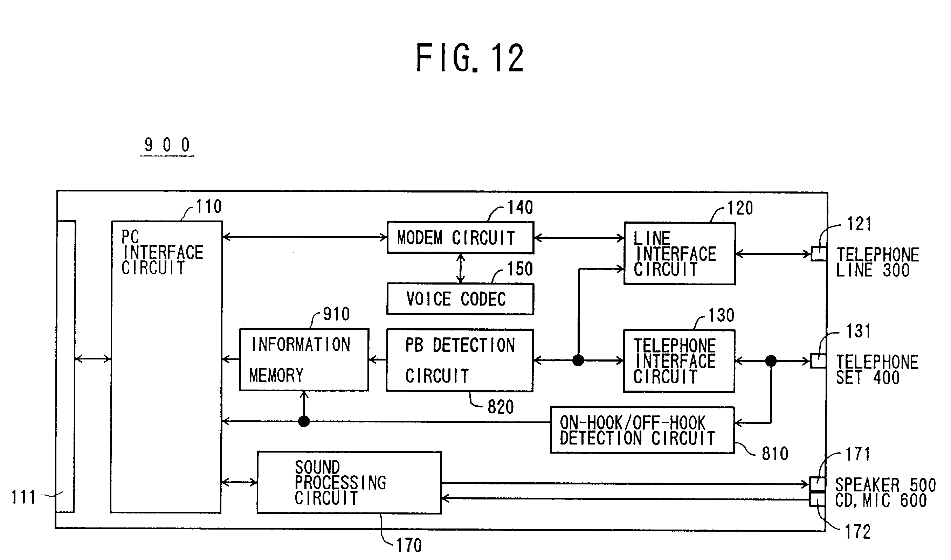

Fig. 12 is a block diagram of a communication interface module 900 according to a fourth embodiment of the present invention. In Fig. 12, parts that are the same as those shown in the previously described figures are given the same reference numbers. The module 900 is equipped with an information storage unit 910 provided between the PB detection circuit 820 and the PC interface circuit 110 and controlled by the output signal of the on-hook/off-hook detection circuit 810. When the storage unit 910 receives the off-hook signal from the detection circuit 810, the information storage unit 910 stores data indicative of the telephone number detected by the PB detection circuit 820. When the telephone set 400 is in the on-hooked state, the PC interface circuit 110 reads the telephone number from the information storage unit 910 and supplies it to the personal computer 200.

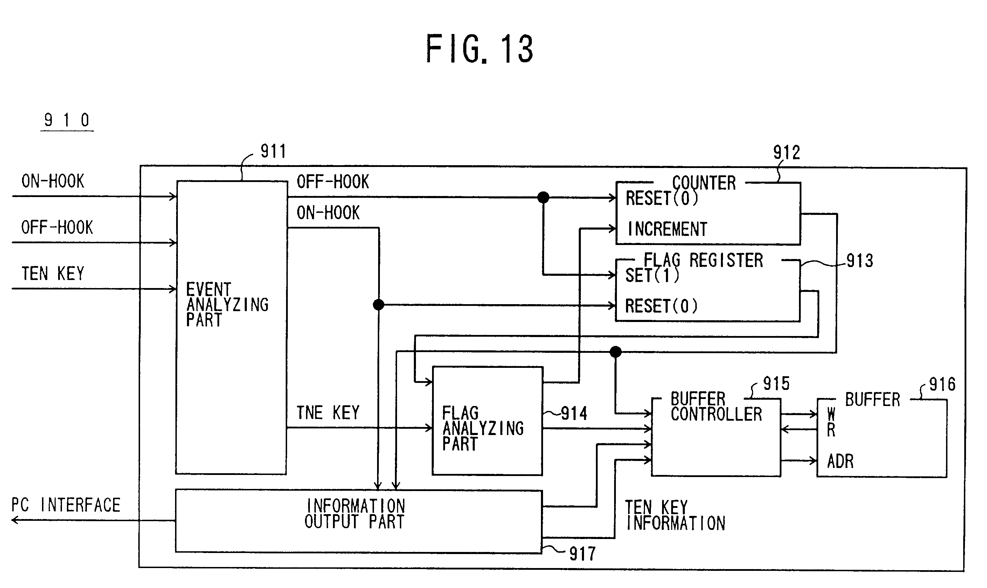

Fig. 13 is a block diagram of the information storage unit 910 used in the fourth embodiment of the present invention. The information storage unit 910 includes an event analyzing part 911, a counter 912, a flag register 913, a flag analyzing part 914, a buffer controller 915, a buffer 916 and an information output part 917.

The event analyzing part 911 is supplied with the on-hook detection signal and the off-hook detection signal from the on-hook/off-hook detection circuit 810, and is supplied with the information indicative of the telephone number from the PB detection circuit 820. The event analyzing part 911 recognizes, from the above detection signals, the state of the telephone set 400 and the telephone number which is input by using a ten-key pad of the telephone set 400 from the above detection signals. When the event analyzing part 911 detects the off-hook detection signal, it outputs an off-hook pulse synchronized with the rising edge of the off-hook detection signal to the counter 912 and the flag register 913. When the event analyzing part 911 detects the on-hook detection signal, it outputs an on-hook pulse synchronized with the rising edge of the on-hook detection signal to the flag register 913 and the information output part 917.

The counter 912 is reset by the off-hook pulse supplied from the event analyzing part 911, and thus outputs "0" to the buffer controller 915 and the information output part 917. The output signal of the flag register 913 is set to "1" in response to the off-hook pulse supplied from the event analyzing part 911. The output signal of the flag register 913 is supplied to the flag analyzing part 914. The flag analyzing part 914 is supplied with the telephone number information from the event analyzing part 911, and is supplied with the output flag of the flag register 913. When the output flag of the flag register 913 is "1", the flag analyzing part 914 supplies the telephone number information supplied from the event analyzing part 911 to the buffer controller 915. Further, the flag analyzing part 914 generates an increment pulse for each digit of the telephone number, the increment pulse being applied to the counter 912. In the above manner, the digits of the telephone number that are input by operating the ten-key pad are serially supplied, one by one, to the flag analyzing part 914.

The buffer controller 915 is supplied with the output count value of the counter 912, the digits of the telephone number (telephone number information) from the flag analyzing part 914, and a read signal from the information output part 917. The buffer controller 915 handles the count value of the counter 912 as an address, with which the telephone number information is written into the buffer 916. In response to a read signal from the information output part 917, the telephone number information is read from the buffer 916. When the information output part 917 is supplied with the on-hook pulse from the event analyzing part 911, the information output part 917 sequentially reads the digits of the telephone number from the buffer 916, and supplies them to the PC interface circuit 110.

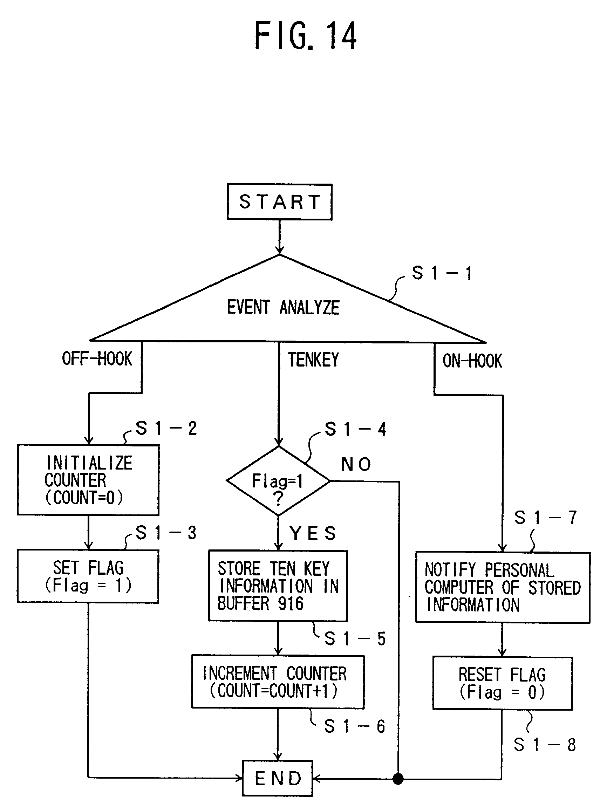

Fig. 14 is a sequence diagram of an operation of the information storage unit 910 shown in Fig. 13. When the information storage unit 910 is supplied with the off-hook signal from the on-hook/off-hook detection circuit 810, the event analyzing part 911 recognizes the off-hook signal (step S1-1), and resets the counter 912 (S1-2). Then, the event analyzing part 911 sets the output flag of the flag register 913 to "1" (step S1-3).

When the information storage unit 910 is supplied with one digit of the telephone number from the PB detection circuit 820, the unit 910 supplies the digit to the flag analyzing part 914. The part 914 analyzes the output flag of the flag register 913 (step S1-4). If the output flag is "1", the part 914 supplies the received digit of the telephone number to the buffer controller 915. The buffer controller 915 uses the count value supplied from the counter 912 as the address, and writes the digit of the telephone number information into the buffer 916 (step S1-5). At this time, the flag analyzing part 914 supplies the count pulse to the counter 912. The counter 912 counts the count pulse supplied from the flag analyzing part 914, and increments the count value by +1 (step S1-6).

By repeatedly carrying out steps S1-1, and S1-4 through S1-6, all the digits of the telephone number can be serially stored in the buffer 916 in accordance with the address values generated by the counter 912.

When the on-hook detection signal is output by the on-hook/off-hook detection circuit 820 after the telephone number is stored in the buffer 916, the information output part 917 outputs the read signal to the buffer controller 915. In response to the read signal, the buffer controller 915 sequentially reads the digits of the telephone number from the buffer 916, and supplies them to the PC interface circuit 110 (step S1-7). The event analyzing part 911 resets the flag register 913 to "O" in order to prevent any digit from being written into the buffer 916 (step S1-8).

In the above manner, the telephone number which is input by using the ten-key pad of the telephone set 400 is stored, one digit by one digit, in the buffer 916 in accordance with respective address values. The information storage unit 910 can have a memory used to store the telephone numbers so that one address is assigned to one telephone number. The above structure will be described below.

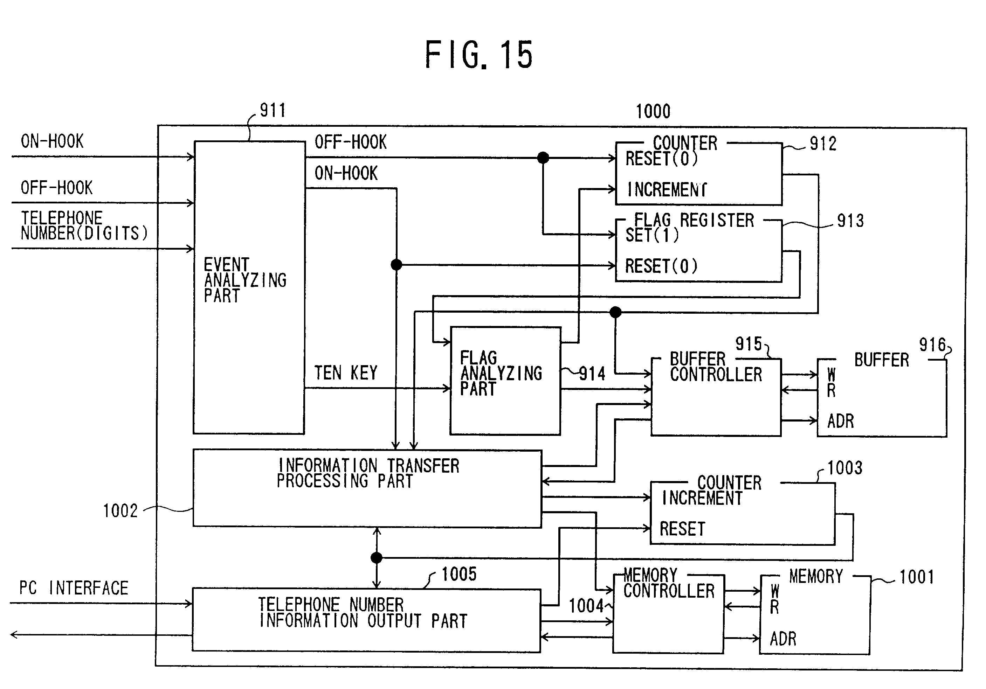

Fig. 15 is a block diagram of a first variation 1000 of the information storage unit 910 used in the fourth embodiment of the present invention. In Fig. 15, parts that are the same as those shown in Fig. 13 are given the same reference numbers. The information storage unit 1000 shown in Fig. 15 has an information output part different from the information storage part 917 shown in Fig. 13. The variation 1000 includes a memory 1001, an information transfer processing part 1002, a counter 1003, a memory controller 1004, and a telephone number information output part 1005.

The memory 1001 is used to store (register) telephone numbers. The information transfer processing part 1002 controls the memory controller 1004 to transfer all the digits of one telephone number stored in the buffer 916 to the memory 1001. The counter 1003 counts the number of telephone numbers stored in the memory 1001. The memory controller 1004 controls the read and write operations of the memory 1001. The telephone number information output part 1005 outputs the telephone number read from the memory 1001 under the control of the memory controller 1004 to the personal computer 200.

One telephone number is stored in the memory 1001 for one address thereof. When the information transfer processing part 1002 is supplied with the on-hook pulse from the event analyzing part 911, the part 1002 supplies the read signal to the buffer controller 915. Hence, the corresponding telephone number is read from the buffer 916 and is then supplied to the memory controller 1004. The information transfer processing part 1002 supplies the telephone number read from the buffer 916 to the memory controller 1004, and supplies the increment pulse to the counter 1003.

The counter 1003 counts the number of telephone numbers stored in the register 916, and is reset by the reset pulse from the telephone number information output part 1005. The count value of the counter 1003 is supplied to the information transfer processing part 1002 and the telephone number information output part 1005.

When the memory controller 1004 is supplied with the telephone number stored in the buffer 916 and transferred via the information transfer processing part 1002, the memory controller 1004 stores the telephone number in the memory 1001 in accordance with the sequential address value. When the telephone number information output part 1005 receives a command which is issued by the personal computer 200 and requests the telephone numbers stored in the memory 1001, the part 1005 serially supplies the memory controller 1004 with the address in which the address value ranges from "0" to the count value of the counter 1003. Thus, the information concerning the telephone numbers accessed by the above address values can be read from the memory 1001.

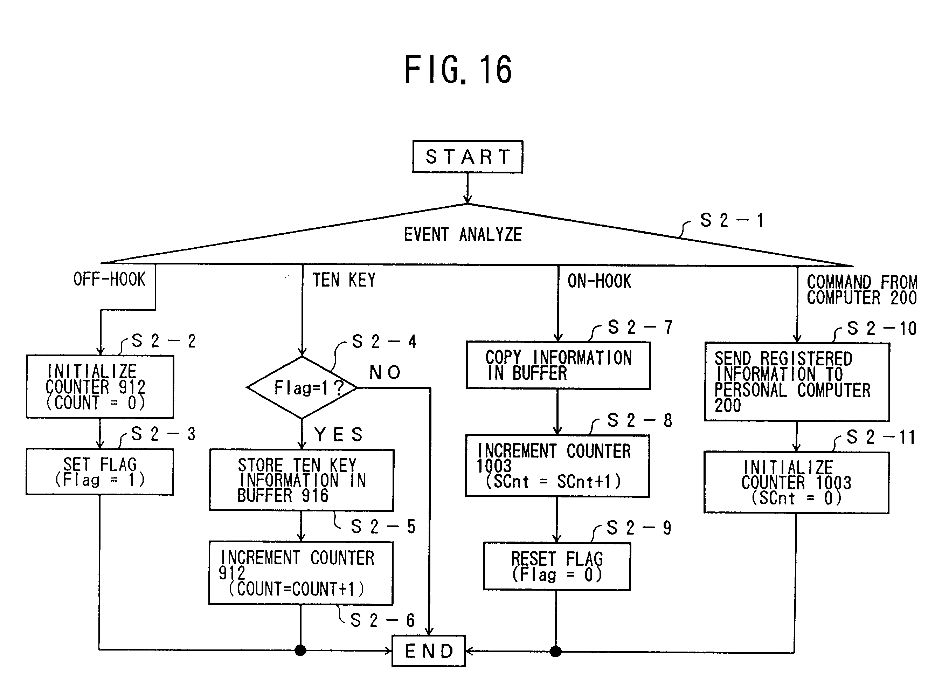

Fig. 16 is a sequence diagram of an operation of the information storage unit 1000 shown in Fig. 15. When the information storage unit 1000 is supplied with the off-hook detection signal from the off-hook/on-hook detection circuit 810, the event analyzing part 911 recognizes the off-hook detection signal (step S2-1), and resets the counter 912 (S2-2). Then, the part 911 resets the output flag of the flag register 913 to "1" (step S2-3).

When the event analyzing part 911 receives one digit of the telephone number from the PB detection circuit 820, the part 911 supplies it to the flag analyzing part 914. Then, the flag analyzing part 914 analyzes the output flag of the flag register 913 (step S2-4), and supplies the digit to the buffer controller 915 when the output flag is "1". The buffer controller 915 uses the count value supplied from the counter 912 as the address, and writes the received digit into the buffer 916 (step S2-5). At this time, the flag analyzing part 914 supplies the count pulse to the counter 912, which then increments the count value by +1 in response to the count pulse from the part 914 (step S2-6). The next digit of the telephone number supplied from the PB detection circuit 820 is stored in the buffer 916 by the next address value.

By repeatedly carrying out the steps S2-1, and S2-4 to S2-6, all the digits of the telephone number are stored in the buffer 916 according to the consecutive address values thereof.

When the information transfer processing part 1002 is supplied with the on-hook detection signal from the on-hook/off-hook detection circuit 820 via the event analyzing part 911 after all the digits of the telephone number are stored in the buffer 916, the information transfer processing part 1002 supplies the read signal to the buffer controller 915. In response to the read signal, the buffer controller 915 serially reads the digits of the telephone number from the buffer 916, starting from address "0", and writes the digits into the memory 1001 as one telephone number under the control of the memory controller 1004 (step S2-7). The address value used at that time follows the previous address value which was used in the last execution of step S2-7.

The information transfer processing part 1002 supplies the increment pulse to the counter 1003, and increments the count value SCnt of the counter 1003 by +1 (step S2-8). The event analyzing part 911 resets the flag register 913 to "0" in order to prevent any telephone number from being written into the buffer 916 (step S2-9).

In the above-mentioned manner, one telephone number consisting of the digits read from the buffer 916 is registered in the memory 1001 of the information storage unit 1000 for one address thereof.

When the telephone number information output part 1005 receives a command which is issued by the personal computer 200 and requests the telephone number information, the part 1005 supplies the memory controller 1004 with the address in which the address value ranges from "0" to the count value of the counter 1003. Thus, the telephone numbers accessed by the above address values can be serially read from the memory 1001. The telephone numbers read from the memory 1001 are then supplied to the personal computer 200 via the PC interface circuit 110 (step S2-10).

When the telephone number information output part 1005 reads the telephone number information from the memory 1001, it supplies the counter 1003 with the reset pulse, so that the count value of the counter 1003 is reset to "O" (step S2-11). Hence, the next telephone number can be stored in the memory 1001 in accordance with the address starting from "0".

According to the second variation shown in Figs. 15 and 16, it is possible to effectively supply the personal computer 200 with a plurality of telephone numbers and reduce the load of the personal computer 200.

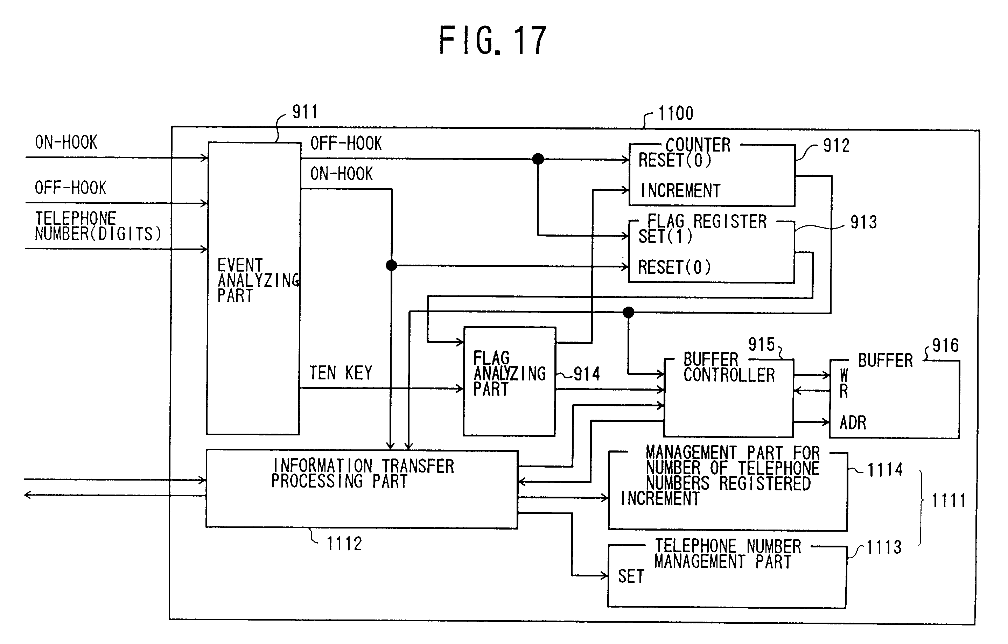

Fig. 17 is a block diagram of a second variation 1100 of the information storage unit 910. In Fig. 17, parts that are the same as those shown in the previously described figures are given the reference numbers. The second variation 1100 has a telephone number management function, which contributes to reducing the load of the personal computer 200. The above telephone number management function can be executed by a telephone directory management part 1110, which is made up of a telephone directory management table 1111 and a telephone number management controller 1112. The telephone directory management table 1111 is a table in which the telephone number selected by the telephone set 400 is registered together with the name of the owner having the above telephone number, the date of registration and the address thereof.

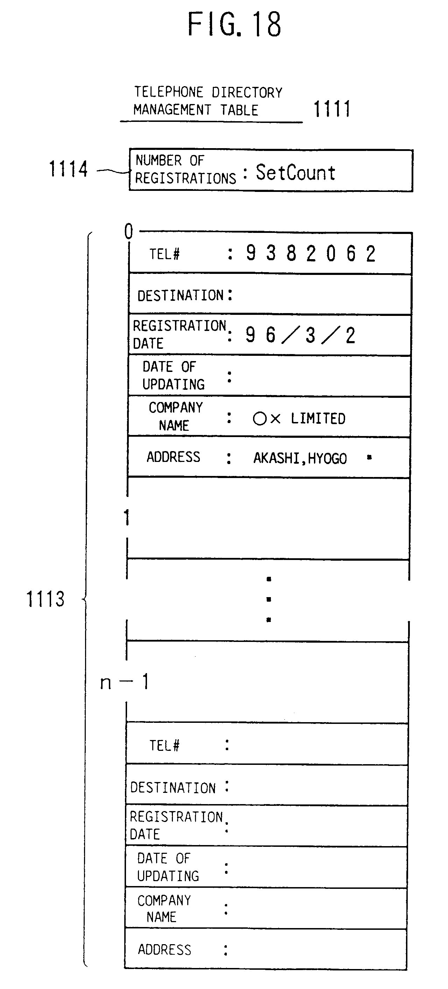

Fig. 18 is a diagram showing a data structure arranged in the telephone directory management table 1111. As shown in Fig. 18, the telephone directory management table 1111 has a telephone number management part 1113 which manages the telephone numbers, and a number-of-registered-telephone-numbers management part 1114, which manages the number of telephone numbers registered in the table 1111. The telephone number management part 1113 has a structure in which the following items of information are arranged in the order of the date of registration. The items of information are the telephone number, the name of the owner (destination) having the telephone number, the date when the telephone number is registered, the date when information indicative of the telephone number or the like is updated, the name of the company related to the corresponding telephone number, and the address thereof. The number-of-registered-telephone-numbers management part 1114 manages the number of telephone numbers managed in the telephone number management part 1113.

The information managed by the telephone directory management table 1111 is set by the telephone number management controller 1112. The telephone number management controller 1112 is supplied with the on-hook signal from the event analyzing part 911 and the count value of the counter 912. The telephone number management controller 1112 starts to read the telephone number stored in the buffer 916 in response to the on-hook pulse supplied from the event analyzing part 911. At this time, the telephone number management controller 1112 recognizes the last value of the address of the number information read from the buffer 916 in response to the output count value of the counter 912. When the telephone number management controller 1112 reads the telephone number information from the buffer 916, it supplies the read telephone number to the telephone number management part 1113, and increments the number of telephone numbers registered by +1.

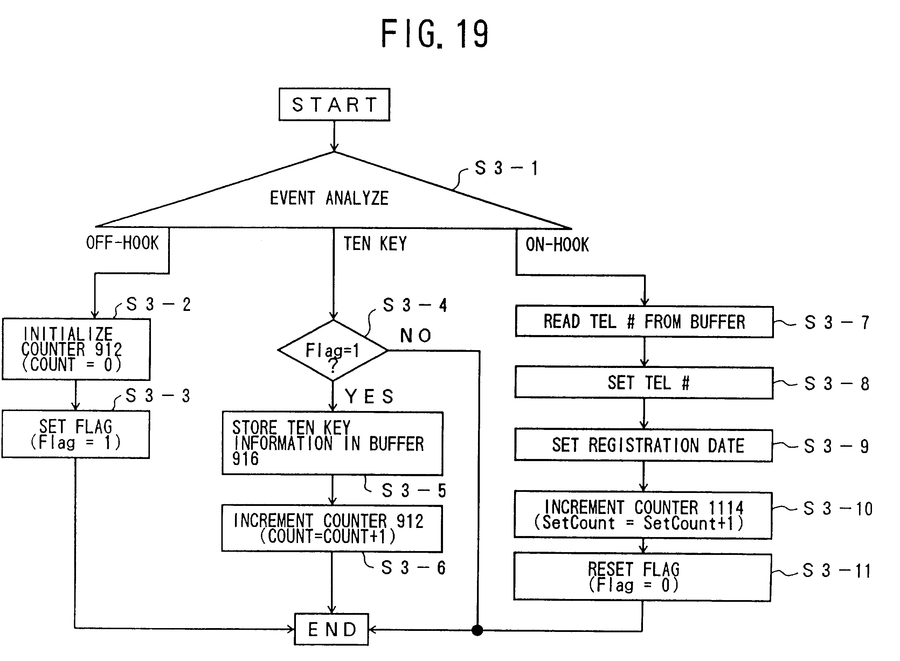

Fig. 19 is a sequence diagram of an operation of the information management unit 1100 shown in Fig. 17. When the off-hook signal from the off-hook/on-hook detection circuit 810 is supplied to the information storage unit 1100, the event analyzing part 911 recognizes the off-hook signal (step S3-1), and resets the counter 912 (step S3-2). Then, the event analyzing part 911 sets the output flag of the flag register 913 to "1" (step S3-3).

When the event analyzing part 911 is supplied with one digit of the telephone number from the PB detection circuit 820, the part 911 supplies the received digit to the flag analyzing part 914. The part 914 analyzes the output flag of the flag register 913 (step S3-4), and supplies the digit of the telephone number to the buffer controller 915 when the output flag is "1". The buffer controller 915 uses the count value supplied from the counter 912 as the address, and writes the digit into the buffer 916 (step S3-5).

The flag analyzing part 914 supplies the count pulse to the count register 912, which counts the received count pulse and increments the count value by +1 (step S3-6). Hence, the next digit of the telephone number information supplied from the PB detection circuit 820 is stored in the buffer 916 in accordance with the next address.

By repeatedly carrying out the steps S3-1 and S3-4 to S3-6, all the digits of the telephone number are serially stored in the buffer 916 in accordance with the successive address values.

When the on-hook detection signal is supplied to the information storage unit 1100 after the telephone number is stored in the buffer 916, the telephone number management controller 1112 supplies the read signal to the buffer controller 915. When the buffer controller 915 receives the read signal from the controller 1112, the buffer controller 915 reads all the digits of the telephone number from the buffer 916 starting from address "0", and obtains one telephone number consisting of the read digits (step S3-7).

The telephone number management controller 1112 sets the telephone number obtained at step S3-7 in the telephone directory management table 1111 (step S3-8). Then, the controller 1112 sets the registration date in a related area of the table 1111 (step S3-9). The controller 1112 has a built-in timer, and the registration date can be obtained from the built-in timer. The date information can be obtained from the personal computer 200.

Then, the telephone number management controller 1112 increments the value in the part 1114 of the table 1111 by +1 in order to update the number of telephone numbers (SetCount) registered in the table 1111 (step S3-10). The event analyzing part 911 resets the flag register 913 to "0", so that the telephone number information is prevented from being written into the buffer 916 (step S3-11).

In the above-mentioned manner, the telephone number information can be registered in the telephone directory management table 1111. Information indicative of the destination name, company name and address can be supplied from the personal computer 200 and written in the table 1111 under the control of the controller 1112.

When an application for management of the telephone directory is initiated by the personal computer 200, the information registered in the table 1111 and shown in Fig. 18 can be supplied to the personal computer 200. Then, the personal computer 200 displays the telephone number information on the CRT 205 (Fig. 6).

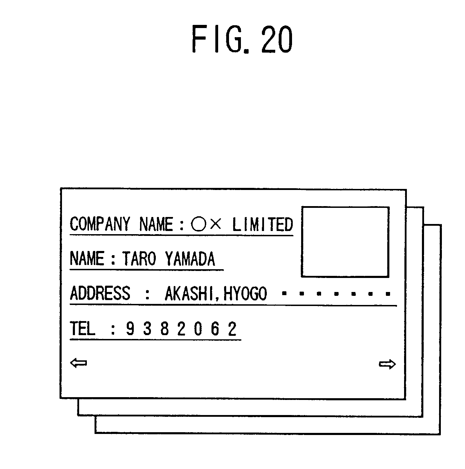

Fig. 20 is a diagram showing a display plane created by the above application program executed by the personal computer 200. One display plane is created for each telephone number by using the telephone number information managed by the information storage unit of the communication interface module of the present invention.

According to the second variation of the information storage unit, it is possible to reduce the load of the personal computer 200 because the telephone directory is managed by the communication interface module of the present invention.

In the above-mentioned embodiments of the present invention and variations thereof, the type of the telephone line 300 is not limited to the push button type line, but can be an arbitrary type such as a dial pulse type. A telephone set connected to such a dial pulse type telephone line is a dial pulse type telephone set. In this case, the PB detection circuit 820 is replaced by a known dial pulse detection circuit.

The present invention is not limited to the specifically disclosed embodiments, and variations and modifications may be made without departing from the scope of the present invention. It should be noted that the term part refers to any suitable means, i.e. the term first interface part refers to any first interface means.

## Claims

1. A communication interface module (100) comprising:
a first interface part (110) which couples a data processing device (200) to the rest of the communication interface module (100);
a modem part (140) which allows the data processing device (200) to communicate with a remote device via a transmission line (300);
a second interface part (130) which couples a telephone set (400) coupled to the communication interface module (100) to the transmission line (300);
a sound part (170) which generates a sound signal; and
an add part (180) which selectively adds the sound signal to a signal transferred between the telephone set (400) and the transmission line (300).

2. The communication interface module as claimed in claim 1, wherein said add part (180) adds the sound signal to the signal transferred between the telephone set and the transmission line in response to a given command supplied from the data processing device.

3. The communication interface module as claimed in claim 1, further comprising an on-hook/off-hook detection circuit (810) which determines whether the telephone set is in an on-hooked state or an offhooked state and informs the data processing device of a detected state of the telephone set.

4. A communication interface module (100) comprising:
a first interface part (110) which couples a data processing device (200) to the rest of the communication interface module (100);
a modem part (140) which allows the data processing device (200) to communicate with a remote device via a transmission line (300);
a second interface part (130) which couples a telephone set coupled to the communication interface module to the transmission line;
a detection circuit (820) which detects a telephone number which is input via the telephone set and informs the data processing device of the telephone number detected via the first interface part.

5. The communication interface module as claimed in claim 4, further comprising an information storage unit (910) which stores the telephone number detected by said detection circuit (820).

6. The communication interface module as claimed in claim 5, wherein said information storage unit comprises:
a buffer part (916) which stores the telephone number detected by said detection circuit (820);
a management part (1111) which manages the telephone number stored in said buffer part; and
a controller (1112) which causes the telephone number detected by said detection circuit after it is determined that the telephone set is in the off-hooked state to be stored in the buffer part (916) and causes the telephone number stored in the buffer part to be registered in the management part (1111).

7. The communication interface module as claimed in claim 6, wherein said management part (1111) manages given information concerning the telephone number together with the telephone number registered in the management part (1111).

8. The communication interface module as claimed in claim 6, wherein said management part (1111) manages information which shows a number of telephone numbers registered therein.

9. The communication interface module as 5 claimed in claim 6, wherein the management part (1111) manages a date of registration for each telephone number registered therein.

10. The communication interface module as claimed in any preceding claim, wherein the first interface part (110) conforms with the RS232C interface.

11. The communication interface module as claimed in any preceding claim, further comprising a printedcircuit board on which the first interface part (110), the modem part (140), the second interface part (130), the sound part (170) which generates a sound signal, and the add part (180) are mounted.

12. An information processing apparatus comprising:
a data processing device (220); and
a communication interface module according to any preceding claims.
